# EUROPEAN PATENT SPECIFICATION

(11) **EP 0 984 345 B1**
(45) Date of publication and mention of the grant of the patent: **21.11.2001**
(21) Application number: 99306538.2
(22) Date of filing: 19.08.1999
(51) Int. Cl.: G05G 5/00, A01D 34/68

(54) **Safety lock mechanism for a lever switch**
Sicherheitssperrvorrichtung für einen Hebelschalter
Dispositif de verrouillage de sécurité pour une commande à levier

(30) Priority: 28.08.1998 GB 9818787
(43) Date of publication of application: 08.03.2000
(73) Proprietor: Black & Decker Inc., Newark Delaware 19711 (US)
(72) Inventor: Richards, Gareth, Spennymoor, Co. Durham DL16 6UR (GB)
(74) Representative: Harries, Simon George

(56) References cited:
- DE-C- 4 228 103
- FR-A- 2 659 761

## Description

The present invention relates to an actuating mechanism and in particular to actuating mechanisms for use with a bowden cable on a lawn mower.

Commercially available types of lawn mower comprise a cutting deck mounted on wheels or rollers. A motor is mounted on the deck of the mower which rotatingly drives a cutting blade mounted beneath the cutting deck about a substantially vertical axis. A handle is attached to the rear of the mower by which an operator is able to manoeuvre the mower. The motor can either be an electric motor powered by either a battery or a mains electricity power supply or be a combustion engine.

It is desirable for the operator to be able to control the motor whilst manoeuvring the lawn mower by the handle. Therefore, a control mechanism is commonly provided on the handle which enables the operator to control the motor whilst holding the handle of the mower. Such control mechanisms include a lever box mounted on the handle in close proximity to the location where an operator would grasp the handle. A lever biased towards an "OFF" position, projects from the lever box in the general direction of the hands of an operator. The lever is connected to a device which is to be controlled by the lever via a mechanical link. The mechanical link transfers the driving force from the lever to the device. Such a device can be located in close proximity to the lever such as an electric switch located next to the lever or located a considerable distance away such as the throttle of an engine located on a different part of the equipment. If the motor is electric, it can be connected to a switch via a cable mounted in the lever box which is linked to the lever via the mechanical link. Alternatively, the switch can be mounted on the deck of the mower and which can be connected to the lever via the mechanical link such as a bowden cable. In either case, depression of the lever by the operator operates the mechanical link to close the switch to complete an electric circuit, which in turn activates the electric motor. If the motor is a combustion engine, usually a bowden cable provides the mechanical link between the lever and the throttle of the engine. Depression of the lever by the operator controls the throttle via the bowden cable.

Lever boxes often include a safety lock off switch to prevent operation of the mower by accidental depression of the lever. The safety lock off switch has to be activated prior to the depression of the lever in order for the lever to operate the motor.

Known safety lock off switches operate by two methods. In the first method, the mechanical link is connected permanently to the lever. The safety lock off switch is biased towards an "OFF" position where it physically blocks the movement of the lever. Whilst the safety lock off switch is in the "OFF" position, all movement of the lever is prevented. When it is moved to an "ON" position, the lever is able to move freely, thus operating the mower. However, such a design of safety lock off switch suffers from the problem that, if an operator accidentally tries to move the lever whilst the safety lock switch is on "OFF" position, a large force is exerted on the blocking mechanism of the safety lock off switch. This force can be considerable if the lever is pivotally mounted in the lever box due to the mechanical advantage of the lever particularly if the lever has a long length. This can result in wear and tear and possibly damage to either the lever or the blocking mechanism. Such safety lock off mechanisms are disclosed in FR 2659761 and DE 4228 103.

In the second method, the safety lock off switch forms part of the link mechanism either by attaching it to the lever or by completing the mechanical link. The safety lock off switch is moveable between a first position and a second position. When the safety lock off switch is in the first "OFF" position, the lever is either disconnected from the mechanical link or the mechanical link is broken. When the safety lock off switch is moved to the second "ON" position, the safety switch either forms a link between the lever and the mechanical link or completes the mechanical link. In either case the safety lock off switch remains part of the connection whilst the lever remains operable. The lever is able to move regardless of whether the safety lock off switch is in an "ON" position or an "OFF" thus overcoming the problems associated with the first method.

WO 93/14621 discloses such a lawn mower activation switch comprising a lever pivotally mounted on and which projects from a lever box, a safety lock off button, and an electric switch which is connected to an electric cable. The lever is pivotal between an "ON" and "OFF" position. The safety lock off button is moveable between a "STOP" and "READY" position. Whilst the safety lock off button is in the "STOP" position, the electric switch remains mechanically detached from the lever, the lever being able to freely pivot. When the safety lock off button is moved to the "READY" position, it completes the mechanical linkage between the lever and the electric switch. Thus as the lever pivots, the mechanical movement is transferred via the safety lock off switch to the electric switch.

Use of the safety lock off switch to complete or connect the mechanical linkage can result in a mechanical linkage which is complex. The force applied to the lever, which can be considerable, has to be transferred across all the stages of linkage including the safety lock off switch. As a failure in any one stage of the link mechanism results in a failure of the whole link mechanism, each stage has to be robust enough to withstand the forces applied. Therefore there is likely to be an increase in the risk of mechanical failure due to the increased number of links. Furthermore, an element of movement is introduced in each stage of the linkage due to the limits in the tolerance. This can result in an unnecessary amount of play within the mechanical link resulting in a decrease in the sensitivity of the control by the lever.

Accordingly, there is provided an acutating mechanism comprising a driving actuator moveable between a first and second position, an engagement actuator capable of drivingly engaging a mechanical link with the driving actuator so that movement of the driving actuator is transferred directly to the mechanical link, wherein the driving actuator is capable of moving between its first and second positions irrespective of whether the driving actuator is in driving engagement with the mechanical link or not, whereby the engagement actuator forms no part of the link between the driving actuator and the engagement actuator when the engagement actuator has drivingly engaged the mechanical link with the driving actuator so that the driving actuator is connected directly to the mechanical link.

By constructing it in this manner the actuator is never blocked from movement. This can prevent excessive forces being applied to component parts of the actuating mechanism by the use of the driving actuator. When the engagement actuator has drivingly engaged the mechanical link with the driving actuator, the driving actuator is directly connected to the mechanical link, the engagement actuator forming no part of the link. This can reduce the number of stages in the link mechanism between the pivotal handle and the mechanical link. Thus the force applied to and the movement of the driving actuator can be transferred more efficiently and accurately by the mechanical link.

The driving actuator and the engagement actuator can be configured so that the engagement is only capable of drivingly engaging the mechanical link with the driving actuator when the driving actuator is located at pre-determined positions, and possibly in only one pre-determined position.

The mechanical link can be prevented from disengaging from the driving actuator when the driving actuator is located at pre-determined positions. Furthermore, the mechanical link can be prevented from disengaging from the driving actuator unless the driving actuator is located in one pre-determined position.

The mechanical link could be in the form of many types, for example, a chain or pulley or a series of interlinking metal rods or bars, cogs or wheels.

The cable of the bowden cable could comprises an anchor, such as a spherical ball which is capable of moving into driving engagement with the driving actuator by the engaging actuator. The cable of the bowden cable can terminate at the anchor.

Preferably the driving actuator is a pivotally mounted lever.

The driving actuator can comprise a recess which receives the anchor when the anchor drivingly engages with the driving actuator. Biasing means can be located within the recess to bias the anchor out of the recess when the anchor is located within it.

The engagement actuator can comprise a slidable button capable of moving the anchor into the recess.

Two embodiments of the invention will now be described with reference to the following drawings of which:-
Figure 1 is a side view of a lawn mower;
Figure 2 is a side view of a bowden cable lever box;
Figure 3 is a side view of the bowden cable lever box with the outer clamshell removed when viewed from the opposite side to that of Figure 2;
Figure 4 is a perspective view of the lever according to the first embodiment of the invention;
Figure 5 is a cross-sectional view of the safety lock mechanism in the direction indicated by Arrows A in Figure 3 when the lever and the safety lock button are in their released state;
Figure 6 is a cross-sectional view of the safety lock mechanism in the direction indicated by Arrows A in Figure 3 when the safety lock button has been depressed;
Figure 7 is a cross-sectional view of the safety lock mechanism in the direction indicated by Arrows A in Figure 3 when the safety lock button is depressed and the lever activated; and
Figure 8 is a cross-sectional view of the safety lock mechanism in the direction indicated by Arrows A in Figure 3 when the lever is activated without depression of the safety lock button.

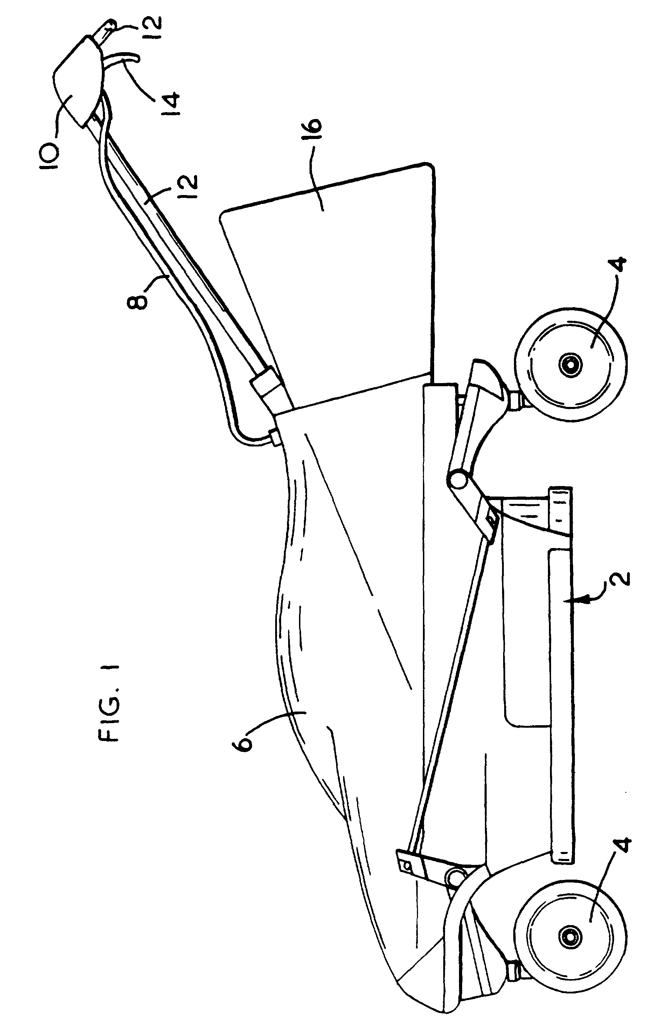

Referring to Figure 1, the lawn mower comprises a cutting deck (2) mounted on four castor wheel assemblies (4). An electric motor (not shown) is mounted on the deck (2) and which rotatingly drives a cutting blade (not shown) mounted on the output spindle of the motor about a substantially vertical axis beneath the cutting deck (2). A battery (not shown) is mounted on the cutting deck which is in electrical connection with the motor via a switch mechanism (not shown) mounted on the motor. The battery powers the motor when the switch mechanism is activated. A hood (6) encloses the battery, motor and switch mechanism. A grass box (16) is attached to the rear of the mower for the collection of the grass cutting generated by the cutting action of the mower. A bowden cable (8) runs from the switch mechanism to a lever box (10) mounted on a handle (12) attached to the rear of the lawn mower. A pivotal lever (14) projects through a hole (30) in the lever box (10). Movement of the cable (18) located within the sleeve (20) of the bowden cable (8) operates the switch mechanism to complete or break the electrical circuit between the battery and motor to switch the mower on or off respectively.

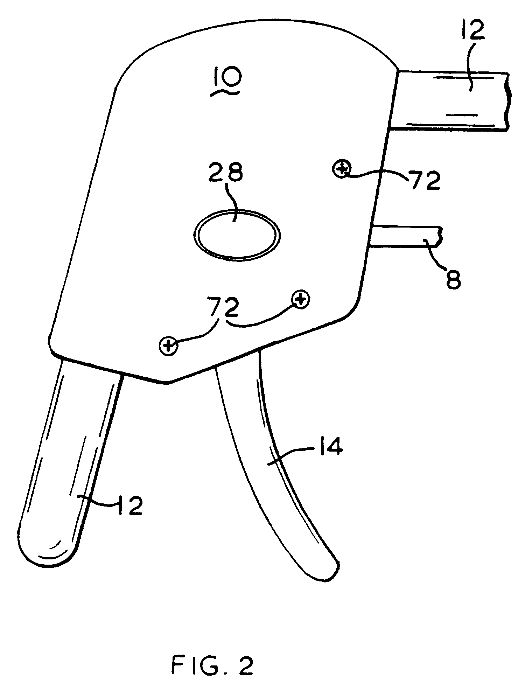

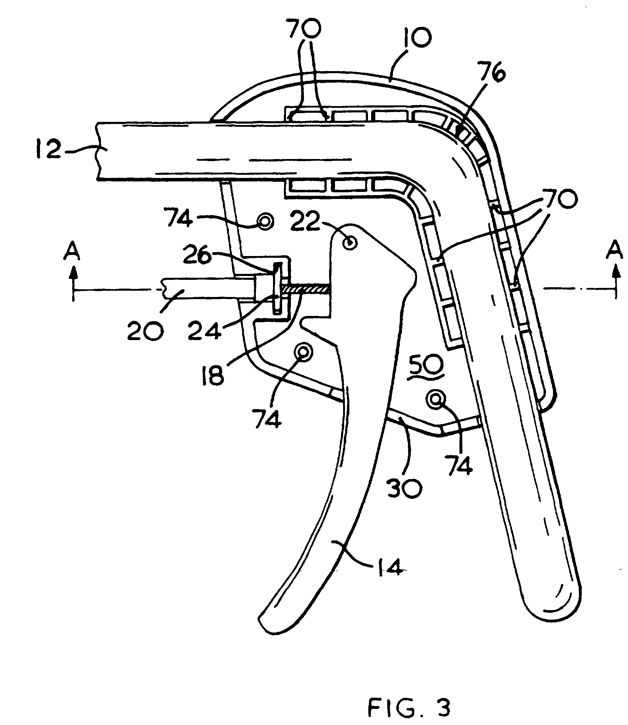

Figures 2 and 3 show the lever box (10) which comprises two plastic clamshells connected together. The rear handle (12), which comprises a hollow metal tube, passes through the lever box (10). A plurality of ribs (70) are integrally formed on the inside of both clamshells and which are shaped to receive and hold the metal tube of the handle when the clamshells are connected together. The two clamshells are attached to each other using three screws (72) (as shown in Figure 2), which screw into three bases (74) (shown in Figure 3). When the lever box is mounted onto the tube, the tube is sandwiched between the two clamshells. The ribs (70) locate the tube within the clamshells and grip the tube. A bend (76) within the tube is located within the lever box which co-operates with the ribs so as to prevent the lever box sliding along the tube.

The lever (14) pivots about an axis (22). The sleeve (20) of the bowden cable (8) terminates in a circular flange (24) which has a diameter greater than the sleeve (20). The flange slots into a recess (26) formed in the clamshells and holds the flange (24) and sleeve (20) stationary relative to the lever box (10). The cable (18) within the bowden cable (8) is attached to the lever (14) at a point away from its axis (22) of pivot so that pivotal movement of the lever (14) results in a sliding movement of the cable (18) within the sleeve (20). A spring (not shown) is mounted on the switch mechanism attached to the other end of the bowden cable (8) which biases the cable (18) relative to the sleeve (20) so that, at the lever box (10) end of the bowden cable (8), the cable is biased towards being withdrawn into the sleeve (20). A button (28) is located on the side of the lever box (10) which can be depressed into the lever box (10). The button (28) interacts with the connection between the end of the cable (18) and the lever (14).

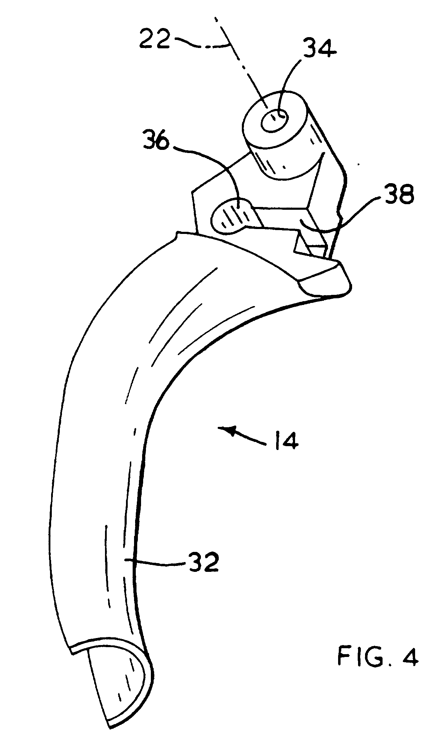

Figure 4 shows a drawing of the lever (14) according to the first embodiment of the invention. The lever (14) comprises a grip section (32) which is located outside of the lever box (10) when assembled and which is gripped, moved and held against the biasing force of the spring by an operator when the lever is activated. A recess (34) having a circular cross-section and which receives a peg integrally formed with the clamshell of the lever box (10) when the lever (14) is mounted within the lever box (10) and about which the lever (14) pivots within the lever box (10). A second recess (36) is formed away from the first recess (34) along the lever which also has a circular cross-section. A slot (38) extends from the second recess (36) to the edge of the lever. The width of the slot (38) is less than the diameter of the cross-section of the second recess (36).

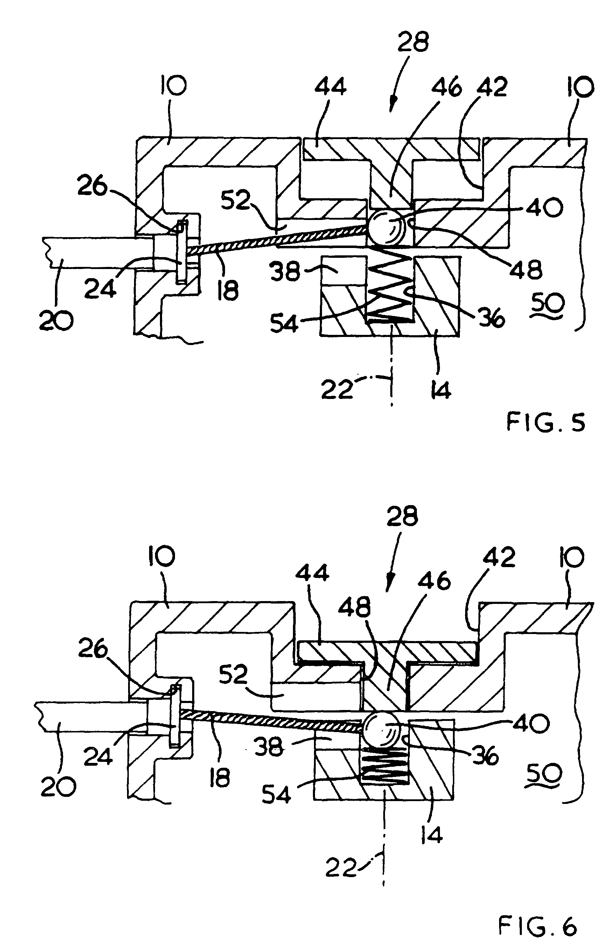

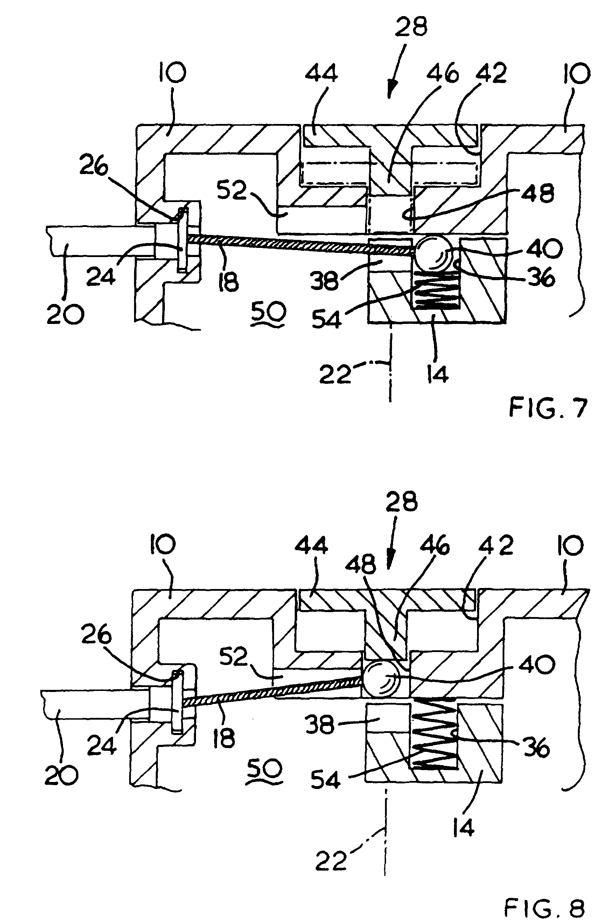

The operation of the safety lock mechanism which comprises a lever according to the first embodiment of the invention will now be described with reference to Figures 5 and 8. The end of the cable (18) terminates in spherical metal ball (40). The diameter of the ball (40) is slightly less than that of the second recess (36) formed in the lever (14) but greater than the width of the slot (38) formed in the lever (14).

The button (28) comprises an oval shaped finger engagement section (44) which is located within a corresponding oval recess (42) formed in the side of the lever box (10). The oval shaped finger engagement section (44) is integrally formed with a peg (46) of circular cross-section. The peg (46) is located in an aperture (48) having a slightly larger circular cross-section than the peg (46) but the same diameter as the second recess (36) formed in the lever (14) and which connects between the recess (42) for the finger engagement section and the inner space (50) formed by the lever box (10). A slot (52) of similar width to the slot (38) formed in the lever (14) extends from the side of the aperture (48). Means (not shown) prevent the button from falling out of the lever box (10).

A spring (not shown) biases the lever to a forward position as shown in Figures 5 and 6.

Figure 5 shows the lever box when neither the lever or the button has been activated by the operator. The lever is in a forward position due to the biasing force of the spring. The second recess (36) is aligned and co-axial with the aperture (48) formed in the wall of the lever box (10). The slot (38) in the lever (14) is also aligned with the slot (52) in the wall of the lever box (10).

The spherical ball (40) can be located in either the second recess (36) of the lever (14) or the aperture (48) in the wall of the lever box (10). The slots (38; 52) formed in the lever (14) and housing are sufficiently narrow to prevent the spherical ball from passing through the slots. The cable (18) attached to the spherical ball (40) is held under tension due to the biasing force of the spring on the switch mechanism mounted on the motor.

A helical spring (54) is located within the second recess (36) of the lever (14) which engages with the bottom of the recess (36) and the spherical ball (40). When the second recess and the aperture (48) are aligned, as shown in Figure 5, the spring (54) biases the spherical ball into the aperture (48) which in turn presses against and biases outwardly the peg (46) of the button (28), pushing the button (28) to its outermost position.

To activate the switch of the mower, the cable (18) has to be pulled out of the sleeve (20) of the bowden cable (8) in the lever box (10). This is achieved by the pivotal movement of the lever (14). However, prior to pivotally moving the lever, the spherical ball (40) has to be moved so that it is engaged with the lever (14).

The spherical ball is moved by depression of the button (28) by the operator (as shown in Figure 6). As the button (28) is depressed, the peg (46) pushes the spherical ball from the aperture (48) into the second recess (36) against the biasing force of the spring (54). When the button is fully depressed the end of the peg is aligned with the inner side of the wall of the lever box (10). The lever (14) is then pivoted about its axis of pivot (22). As the lever (14) pivots, the spherical ball (40) is moved away from the sleeve (20) of the bowden cable (8), pulling the cable (18) out of the sleeve (20) against the biasing force of the spring mounted on the switch mechanism (as shown in Figure 7). The spherical ball (40) is prevented from being ejected from the second recess (36) due to the spring (54) by the inner side wall of the lever box (10) which is located in close proximity to the entrance to the recess (36). The button is able to move freely within its mount regardless of the position of the lever as it is no longer subject to the biasing force of the spring (54). As the cable (18) is withdrawn from the sleeve (20) the switch mechanism located on the motor is activated thus activating the mower.

When the lever (14) is pivoted prior to depression of the button (20), the lever (14) moves without the spherical ball (40) which remains in the aperture (48), the spring sliding off the spherical ball (40) and along the surface of the walls of the lever box. Thus, though the lever (14) pivots, the spherical ball and hence the cable (18) remains stationary, the switch mechanism remaining switched off, (as shown in Figure 8). The button (28) is prevented from being depressed due to the spherical ball (40) being blocked from leaving the aperture (48) due to the side of the lever (14) (the slot (38) is too small to receive the spherical ball (40)).

Thus it is clear that the button (28) has to be depressed prior to the pivotal movement of the lever in order to operate the switch mechanism on the mower. However, once the bowden cable is engaged with the lever (14) the button has no effect on the coupling between the lever and the bowden cable.

In the second embodiment of the invention (no figures) the lever is constructed in a similar manner as the first embodiment lever described previously (see Figure 4). However, in the second embodiment, the second aperture and slot in the design of the first embodiment of lever has been replaced by three apertures and corresponding slots. The dimensions of each of the apertures and slots are the same as the aperture and slot in the first embodiment of the lever. The apertures and slots are positioned radially around the axis of pivot of the lever.

The lever is mounted in a lever box having a button and a bowden cable attached as described previously. The apertures are located so that, as the lever pivots, the apertures consecutively become aligned with the aperture in the lever box. This enables the lever to be pivoted to one of three angles where one of the apertures is able to receive the spherical ball, thereby setting the angular position of the lever in relation to the position of the cable of the bowden cable.

## Claims

1. An actuating mechanism comprising a driving actuator (14) moveable between a first and second position, an engagement actuator (46) capable of drivingly engaging a mechanical link (8) with the driving actuator (14) so that movement of the driving actuator (14) is transferred directly to the mechanical link (8), wherein the driving actuator is capable of moving between its first and second positions irrespective of whether the driving actuator (14) is in driving engagement with the mechanical link (8) or not, **characterised by** the engagement actuator (46) forming no part of the link between the driving actuator (14) and the engagement actuator (46) when the engagement actuator has drivingly engaged the mechanical link with the driving actuator so that the driving actuator is directly connected to the mechanical link.

2. An actuating mechanism as claimed in Claim 1 wherein the driving actuator (14) and the engagement actuator (46) are configured so that the engagement actuator (46) is only capable of drivingly engaging the mechanical link (8) with the driving actuator (14) when the driving actuator (14) is located at pre-determined positions.

3. An actuating mechanism as claimed in Claim 2 wherein the engagement actuator (46) is capable of drivingly engaging the mechanical link (8) in only one pre-determined position.

4. An actuating mechanism as claimed in any one of the previous claims wherein the mechanical link (8) is prevented from disengaging from the driving actuator (14) when the driving actuator (14) is located at pre-determined positions.

5. An actuating mechanism as claimed in Claim 4 wherein the mechanical link (8) is prevented from disengaging from the driving actuator (14) unless the driving actuator (14) is located in one pre-determined position.

6. An actuating mechanism as claimed in any one of the previous claims wherein the mechanical link (8) comprises a bowden cable.

7. An actuating mechanism as claimed in Claim 6 wherein the cable of the bowden cable comprises an anchor (40) which is capable of being moved into driving engagement with the driving actuator (14) by the engaging actuator (14).

8. An actuating mechanism as claimed in Claim 7 wherein the anchor (40) comprises a spherical ball.

9. An actuating mechanism as claimed in either of Claims 7 or 8 wherein the cable (18) of the bowden cable (8) terminates at the anchor (40).

10. An actuating mechanism as claimed in any one of the previous claims wherein the driving actuator (14) is a pivotally mounted lever.

11. An actuating mechanism as claimed in any one of Claims 7 to 10 wherein the driving actuator (14) comprises a recess (36) which receives the anchor (40) when the anchor (40) drivingly engages the driving actuator (14).

12. An actuating mechanism as claimed in Claim 11 wherein driving actuator comprises biasing means (54) located within the recess (36) which biases the anchor (40) out of the recess (36) when the anchor (40) is located within it.

13. An actuating mechanism as claimed in either of Claims 11 or 12 wherein the engagement actuator (46) comprises a slidable button (44) capable of moving the anchor (40) into the recess (36).

## Patentansprüche

1. Betätigungsmechanismus, mit einem antreibenden Betätigungsmittel (14), das zwischen einer ersten und zweiten Position bewegbar ist, und einem Eingriffsbetätigungsmittel (46), das dazu ausgestaltet ist, um eine mechanische Verbindung (8) antreibend mit dem antreibenden Betätigungsmittel (14) in Eingriff zu bringen, um eine Bewegung des antreibenden Betätigungsmittels (14) direkt auf die mechanische Verbindung (8) zu übertragen, wobei das antreibende Betätigungsmittel dazu ausgestaltet ist, um sich unabhängig davon, ob sich das antreibende Betätigungsmittel (14) mit der mechanischen Verbindung (8) in antreibendem Eingriff befindet, zwischen seiner ersten und zweiten Position zu bewegen,
**dadurch gekennzeichnet, daß** das Eingriffsbetätigungsmittel (46) keinen Teil der Verbindung zwischen dem antreibenden Betätigungsmittel (14) und dem Eingriffsbetätigungsmittel (46) bildet, wenn das Eingriffsbetätigungsmittel die mechanische Verbindung antreibend mit dem antreibenden Betätigungsmittel in Eingriff gebracht hat, so daß das antreibende Betätigungsmittel direkt mit der mechanischen Verbindung verbunden ist.

2. Betätigungsmechanismus nach Anspruch 1, bei dem das antreibende Betätigungsmittel (14) und das Eingriffsbetätigungsmittel (46) so konfiguriert sind, daß das Eingriffsbetätigungsmittel (46) nur dann in der Lage ist, die mechanische Verbindung (8) mit dem antreibenden Betätigungsmittel (14) in antreibenden Eingriff zu bringen, wenn sich das antreibende Betätigungsmittel (14) in vorbestimmten Positionen befindet.

3. Betätigungsmechanismus nach Anspruch 2, bei dem das Eingriffsbetätigungsmittel (46) dazu ausgestaltet ist, die mechanische Verbindung (8) in lediglich einer vorbestimmten Position in antreibenden Eingriff zu bringen.

4. Betätigungsmechanismus nach einem der vorhergehenden Ansprüche, bei dem die mechanische Verbindung (8) daran gehindert ist, von dem antreibenden Betätigungsmittel (14) außer Eingriff zu kommen, wenn sich das antreibende Betätigungsmittel (14) in vorbestimmten Positionen befindet.

5. Betätigungsmechanismus nach Anspruch 4, bei dem die mechanische Verbindung (8) daran gehindert ist, von dem antreibenden Betätigungsmittel (14) außer Eingriff zu kommen, wenn sich das antreibende Betätigungsmittel (14) nicht in einer vorbestimmten Position befindet.

6. Betätigungsmechanismus nach einem der vorhergehenden Ansprüche, bei dem die mechanische Verbindung (8) einen Bowdenzug beinhaltet.

7. Betätigungsmechanismus nach Anspruch 6, bei dem das Seil von dem Bowdenzug eine Verankerung (40) hat, die dazu ausgestaltet ist, um durch das Eingriffsbetätigungsmittel (46) mit dem antreibenden Betätigungsmittel (14) in antreibenden Eingriff bewegt zu werden.

8. Betätigungsmechanismus nach Anspruch 7, bei dem die Verankerung (40) eine sphärische Kugel beinhaltet.

9. Betätigungsmechanismus nach Anspruch 7 oder 8, bei dem das Seil (18) von dem Bowdenzug (8) an der Verankerung (40) endet.

10. Betätigungsmechanismus nach einem der vorhergehenden Ansprüche, bei dem das antreibende Betätigungsmittel (14) ein schwenkbar montierter Hebel ist.

11. Betätigungsmechanismus nach einem der Ansprüche 7 bis 10, bei dem das antreibende Betätigungsmittel (14) eine Aussparung (36) aufweist, die die Verankerung (40) aufnimmt, wenn die Verankerung (40) antreibend mit dem antreibenden Betätigungsmittel (14) eingreift.

12. Betätigungsmechanismus nach Anspruch 11, bei dem das antreibende Betätigungsmittel eine in der Aussparung (36) angeordnete Vorspanneinrichtung (54) aufweist, die die Verankerung (40) aus der Aussparung (36) herausdrückt, wenn sich die Verankerung (40) darin befindet.

13. Betätigungsmechanismus nach Anspruch 11 oder 12, bei dem das Eingriffsbetätigungsmittel (46) eine verschiebbare Taste (44) aufweist, die dazu ausgestaltet ist, die Verankerung (40) in die Aussparung (36) zu bewegen.

## Revendications

1. Mécanisme d'actionnement comportant un actionneur d'entraînement ( 14) mobile entre une première et une seconde positions, un actionneur de mise. en prise (46) capable de mettre en prise de manière entraînante une liaison mécanique (8) avec l'actionneur d'entraînement (14) de sorte qu'un déplacement de l'actionneur d'entraînement (14) soit transféré directement à la liaison mécanique (8), dans lequel l'actionneur d'entraînement est capable de se déplacer entre sa première position et sa seconde position, que l'actionneur d'entraînement (14) se situe en prise entraînante avec la liaison mécanique (8) ou non, **caractérisé en ce que** l'actionneur de mise en prise (46) ne fait pas partie de la liaison entre l'actionneur d'entraînement (14) et l'actionneur de mise en prise (46) lorsque l'actionneur de mise en prise met en prise entraînante la liaison mécanique avec l'actionneur d'entraînement, de sorte que l'actionneur d'entraînement est relié directement à la liaison mécanique.

2. Mécanisme d'actionnement selon la revendication 1, dans lequel l'actionnement d'entraînement (14) et l'actionneur de mise en prise (46) sont configurés de sorte que l'actionneur de mise en prise (46) ne soit capable de mettre en prise d'une manière entraînante la liaison mécanique (8) avec l'actionneur d'entraînement ( 14) que lorsque l'actionneur d'entraînement 14 se situe au niveau de positions prédéterminées.

3. Mécanisme d'actionnement selon la revendication 2, dans lequel l'actionneur de mise en prise (46) est capable de mettre en prise d'une manière entraînante la liaison mécanique (8) dans seulement une position prédéterminée.

4. Mécanisme d'actionnement selon l'une quelconque des revendications précédentes, dans lequel la liaison mécanique (8) ne peut être désengagée de l'actionneur d'entraînement- (14) lorsque l'actionneur d'entraînement (14) se situe au niveau de positions prédéterminées.

5. Mécanisme d'actionnement selon la revendication 4, dans lequel la liaison mécanique (8) ne peut se désengager de l'actionneur d'entraînement (14) sauf si l'actionneur d'entraînement (14) se situe dans une position prédéterminée.

6. Mécanisme d'actionnement selon l'une quelconque des revendications précédentes, dans lequel la liaison mécanique (8) comporte un câble bowden.

7. Mécanisme d'actionnement selon la revendication 6, dans lequel le câble du câble bowden comprend une ancre (40) qui peut être déplacée en prise entraînante avec l'actionneur d'entraînement (14) par l'actionneur de mise en prise (14).

8. Mécanisme d'actionnement selon la revendication 7, dans lequel l'ancre (40) comprend une bille sphérique.

9. Mécanisme d'actionnement selon la revendication 7 ou 8, dans lequel le câble (18) du câble bowden (8) se termine au niveau de l'ancre (40).

10. Mécanisme d'actionnement selon l'une quelconque des revendications précédentes, dans lequel l'actionneur d'entraînement (14) est un levier monté d'une manière pivotante.

11. Mécanisme d'actionnement selon l'une quelconque des revendications 7 à 10, dans lequel l'actionneur d'entraînement (14) comprend un évidement (36) qui reçoit l'ancre (40) lorsque l'ancre (40) est en prise d'une manière entraînante avec l'actionneur d'entraînement (14).

12. Mécanisme d'actionnement selon la revendication 11, dans lequel l'actionneur d'entraînement comprend des moyens de rappel (54) situés à l'intérieur de l'évidement (36) qui rappellent l'ancre (40) hors de l'évidement (36) lorsque l'ancré (40) est positionnée dedans.

13. Mécanisme d'actionnement selon la revendication 11 ou 12, dans lequel l'actionneur de mise en prise (46) comprend un bouton coulissant (44) capable de déplacer l'ancre (40) à l'intérieur de l'évidement (36).
